(19) Europäisches Patentamt
European Patent Office
Office européen des brevets

(11) **EP 2 343 333 A1**

(12) **EUROPEAN PATENT APPLICATION**
published in accordance with Art. 153(4) EPC

(43) Date of publication:
**13.07.2011 Bulletin 2011/28**

(51) Int Cl.:
**C08J 9/04** (2006.01)   **B29C 45/00** (2006.01)
**B29K 23/00** (2006.01)   **B29K 105/04** (2006.01)
**B29K 105/06** (2006.01)   **B29L 31/30** (2006.01)

(21) Application number: **09823619.3**

(22) Date of filing: **28.10.2009**

(86) International application number:
**PCT/JP2009/068506**

(87) International publication number:
**WO 2010/050509 (06.05.2010 Gazette 2010/18)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **31.10.2008 JP 2008282152**

(71) Applicant: **Prime Polymer Co., Ltd.**
**Tokyo 105-7117 (JP)**

(72) Inventors:
• **KAWAMURA, Tatsuji**
**Sodegaura-shi**
**Chiba 299-0265 (JP)**

• **HIRANO, Koki**
**Sodegaura-shi**
**Chiba 299-0265 (JP)**
• **ISHII, Yukio**
**Sodegaura-shi**
**Chiba 299-0265 (JP)**

(74) Representative: **Raynor, Stuart Andrew**
**J.A. Kemp & Co.**
**14 South Square**
**Gray's Inn**
**London WC1R 5JJ (GB)**

(54) **POLYPROPYLENE RESIN COMPOSITION FOR FOAM MOLDING, AND FOAM-MOLDED ARTICLE USING SAME**

(57)    An object of the invention is to provide foaming polypropylene resin compositions that are suited for injection foam molding, have excellent balance between flowability and melt tension, are foamable at high expansion ratio, and can give lightweight molded foams having excellent appearance and mechanical strength. Another object is to provide injection-molded foams using the compositions.

A foaming polypropylene resin composition of the invention includes: 50 to 90 parts by weight of a high-molecular weight component-containing impact polypropylene (AB); 10 to 30 parts by weight of a rubber component (C) ; and 0 to 20 parts by weight of an inorganic filler (D) (wherein the total of (AB), (C) and (D) is 100 parts by weight); and the high-molecular weight component-containing impact polypropylene (AB) contains 4.5 to 31.0 wt% of a propylene/ethylene copolymer that is identified as a normal temperature paraxylene soluble component, and the high-molecular weight component-containing impact polypropylene (AB) contains 0.2 to 3.7 wt% of a propylene polymer component having an intrinsic viscosity $[\eta]$ at 135°C in tetralin of 13.5 to 20.0 dl/g.

[Fig. 5]

1mm

**Description**

TECHNICAL FIELD

The present invention relates to foaming polypropylene resin compositions suited for the production of injection-molded foams, and injection-molded foams from the compositions. In more detail, the invention relates to injection foaming polypropylene resin compositions which contain a polypropylene polymer containing a high-molecular weight component, and to injection-molded foams from the compositions that are suitably used in automobile interior and exterior parts.

BACKGROUND ART

Polypropylene resins are excellent in moldability, property balance, recycling properties and cost performance and are widely used as resin materials in various industrial fields such as everyday items, houses, household electric appliances and automobile parts.

Recent automobile parts have been strongly required to be reduced in weight for fuel efficiency and less global warming gas emissions. Therefore, they, in particular interior parts, are more frequently molded foams. However, there still has been a need for further weight reduction and maintenance or improvements in mechanical properties of automobile interior and exterior parts. Accordingly, injection-molded foams with higher expansion ratio and excellent mechanical properties are desired.

Injection foam molding in the present invention is a shaping process including an injection step in which a molten resin is injected to fill a mold cavity, and a subsequent foaming step in which the movable mold is slightly moved backward (core-back) to extend the cavity and thereby foaming is induced.

Here, it is known that increasing the flowability (melt flow rate: MFR) of resins leads to improvements in injection moldability of thin-wall products, and increasing the melt tension (MT) enhances foaming ability.

When the initial cavity thickness is set to a large thickness in the manufacturing of relatively large molded foams such as automobile interior and exterior parts, large amounts of resins should be used and the demand for weight reduction cannot be met. It is therefore desired that a molten resin is injected to a thin cavity, which then requires that the resin shows high MFR when it fills the cavity. On the other hand, stable and high-expansion foams are desired to achieve sufficient rigidity of the molded foams, and the production of such molded foams requires high MT at expansion.

However, polyolefin resins generally have a tendency that increasing MFR is accompanied with lower MT, and higher MT comes with lower MFR. When the flowability (MFR) of resins is given priority in injection foam molding, the resin can be injected to a thin cavity to fill the same. However, the melt tension (MT) of the resin is insufficient and the expanded cells are broken during the foaming process. Consequently, the desired expansion ratio or performance of injection-molded foams cannot be obtained.

Under these circumstances, the present applicant has found and proposed that polyolefin resins having specific MFR, intrinsic viscosity and shear stress properties (Patent Literature 1) and propylene resin compositions having specific amounts of eluted components at specific elution temperatures (Patent Literature 2) are suited for injection foam molding. Further, the present applicant has proposed polypropylene resins that have a high melt tension and excellent viscoelastic properties and are suited as materials for molded foams, in detail multistage propylene polymers obtained by producing an ultrahigh-molecular weight propylene polymer component in the first stage (Patent Literature 3).

However, the demand for injection-molded foams coping with further weight reduction has strongly required polypropylene resin compositions and molded foams therefrom which are suited for injection foam molding and have high flowability and melt tension to show resin properties such that the compositions can be injected to a thin cavity to fill the same and can be expanded to form stable expanded cells, and can give injection-molded foams having excellent appearance, product rigidity and impact strength.

Citation List

Patent Literatures

Patent Literature 1: Japanese Patent No. 3918267
Patent Literature 2: JP-A-2008-163320
Patent Literature 3: WO 2005/097842

SUMMARY OF INVENTION

Technical Problem

It is an object of the invention to provide foaming polypropylene resin compositions that are suited for injection foam molding, have excellent balance between flowability and melt tension, are foamable at high expansion ratio, and can give lightweight molded foams having excellent appearance and mechanical strength. It is another object of the invention to provide molded foams using the compositions.

Solution to Problem

The present inventors studied diligently to solve the problems described hereinabove. They have then developed polypropylene resin compositions that are obtainable by blending a specific impact polypropylene containing a high-molecular weight component or a mixture of an impact polypropylene and a homopolypropylene containing a high-molecular weight component, with a rubber component and optionally an inorganic filler. The compositions have been found to have excellent balance between flowability and melt tension, be foamable at high expansion ratio, and be capable of giving lightweight molded foams having excellent appearance and mechanical strength. The present invention has been completed based on the findings.

A foaming polypropylene resin composition according to the invention comprises:

50 to 90 parts by weight of a high-molecular weight component-containing impact polypropylene (AB);
10 to 30 parts by weight of a rubber component (C); and
0 to 20 parts by weight of an inorganic filler (D) (wherein the total of (AB), (C) and (D) is 100 parts by weight) ; wherein the high-molecular weight component-containing impact polypropylene (AB) contains 4.5 to 31.0 wt% of a propylene/ethylene copolymer that is identified as a normal temperature paraxylene soluble component, and
the high-molecular weight component-containing impact polypropylene (AB) contains 0.2 to 3.7 wt% of a propylene polymer component having an intrinsic viscosity $[\eta]$ at 135°C in tetralin of 13.5 to 20.0 dl/g.

The foaming polypropylene resin composition may comprise, in addition to (AB), (C) and (D):

5 to 20 parts by weight of a high flowability homopolypropylene (E) (wherein the total of (AB), (C), (D) and (E) is 100 parts by weight); and
the high flowability homopolypropylene (E) has MFR of 200 to 1000 g/10 min as measured at 230°C under 2.16 kg load in accordance with ASTM D-1238.

In the foaming polypropylene resin composition, the high-molecular weight component-containing impact polypropylene (AB) may comprise:

45 to 87 parts by weight of an impact polypropylene (A) and
2 to 15 parts by weight of a high-molecular weight component-containing homopolypropylene (B) (wherein the total of (A), (B), (C) and (D) is 100 parts by weight); and
the impact polypropylene (A) contains 5 to 30 wt% of a propylene/ethylene copolymer that is identified as a normal temperature paraxylene soluble component, and
the high-molecular weight component-containing homopolypropylene (B) contains:
5 to 22 wt% of a propylene homopolymer component (i) having an intrinsic viscosity $[\eta]$ at 135°C in tetralin of 13.5 to 20 dl/g, and
78 to 95 wt% of a propylene homopolymer component (ii) having an intrinsic viscosity $[\eta]$ at 135°C in tetralin of 0.5 to 3.0 dl/g.

The foaming polypropylene resin composition may comprise, in addition to (A), (B), (C) and (D):

5 to 20 parts by weight of a high flowability homopolypropylene (E) (wherein the total of (A), (B), (C), (D) and (E) is 100 parts by weight); and
the high flowability homopolypropylene (E) has MFR of 200 to 1000 g/10 min as measured at 230°C under 2.16 kg load in accordance with ASTM D-1238.

In the foaming polypropylene resin composition, the impact polypropylene (A) preferably has MFR measured at 230°C under 2.16 kg load in accordance with ASTM D-1238 of 50 to 200 g/10 min, and

the propylene/ethylene copolymer identified as a normal temperature paraxylene soluble component preferably has an intrinsic viscosity [η] of 3.5 to 10 dl/g.

In the foaming polypropylene resin composition,
the rubber component (C) is preferably an ethylene/C3-10 α-olefin copolymer having MFR measured at 190°C under 2.16 kg load in accordance with ASTM D-1238 of 1 to 50 g/10 min and a density of 0.86 to 0.92 g/cm$^3$; and
the rubber component (C) is more preferably an ethylene/α-olefin elastomer produced with a single site catalyst.

The foaming polypropylene resin composition preferably has $MFR_{230}$ measured at 230°C under 2.16 kg load in accordance with ASTM D-1238 of 30 to 200 g/10 min, and $MFR_{230}$ and melt tension $MT_{180}$ preferably have the relations (1) to (3) below:

$$MT_{180} \geq 5500 \times (MFR_{230})^{-2} \cdots (1)$$

$$MT_{180} \leq 30000 \times (MFR_{230})^{-2} \cdots (2)$$

$$40 \leq MFR_{230} \leq 120 \cdots (3)$$

An injection-molded foam according to the invention is obtainable by injection foam molding the foaming polypropylene resin composition of the invention.

The injection-molded foam is preferably obtained by injection foam molding using a chemical foaming agent and/or a physical foaming agent.

The injection-molded foam is preferably produced by injection foam molding wherein the mold cavity clearance ($T_0$) at the initiation of injection is 1.0 to 2.0 mm, and in a cross section of the cavity after the backward movement of a movable mold, the ratio of the length ($T_1$) of the cavity in the extended direction relative to To ($T_1/T_0$) is 1.1 to 5.0.

In a preferred embodiment, the injection-molded foam comprises solid skin layers and an expanded layer interposed therebetween, each solid skin layer on the surface of the molded foam being 0.1 to 0.5 mm and the expanded layer being 2 to 4 mm in thickness, the expanded layer having an expansion ratio of 2 to 6 times, wherein in a cross section of the molded foam in parallel with the direction in which a movable mold has been moved backward, a central region accounting for 10 to 50% of the expanded layer contains cells at least 70% of which have a ratio "cell diameter perpendicular to the solid skin layer/cell diameter along the solid skin layer" of 0.7 to 1.4, and other regions of the expanded layer contain cells at least 60% of which have a ratio "cell diameter perpendicular to the solid skin layer/cell diameter along the solid skin layer" of 0.1 to 0.9.

The injection-molded foam of the invention is preferably an automobile interior or exterior part.

Advantageous Effects of Invention

The foaming polypropylene resin compositions according to the present invention are balanced between flowability permitting injection into a thin and large cavity to fill the same and melt tension providing excellent cell formation ability, and are suited for injection foam molding and can give lightweight molded foams having high mechanical strength. The injection-molded foams of the invention are lightweight and have excellent appearance, uniform cell shape and high mechanical strength.

BRIEF DESCRIPTION OF DRAWINGS

Fig. 1 is a view showing injection molds that are clamped.
Fig. 2 is a view showing injection molds in a core-back condition.
Fig. 3 shows a thickness measurement position for the evaluation of moldablity in Examples.
Fig. 4 shows thickness measurement positions for the evaluation of planarity in Examples.
Fig. 5 is a picture showing a cross section of an injection-molded foam obtained in Example 1 (evaluated as A).

Fig. 6 is a picture showing a cross section of an injection-molded foam obtained in Comparative Example 1 (evaluated as C).

Fig. 7 is a picture showing a cross section of an injection-molded foam obtained in Comparative Example 4 (evaluated as B).

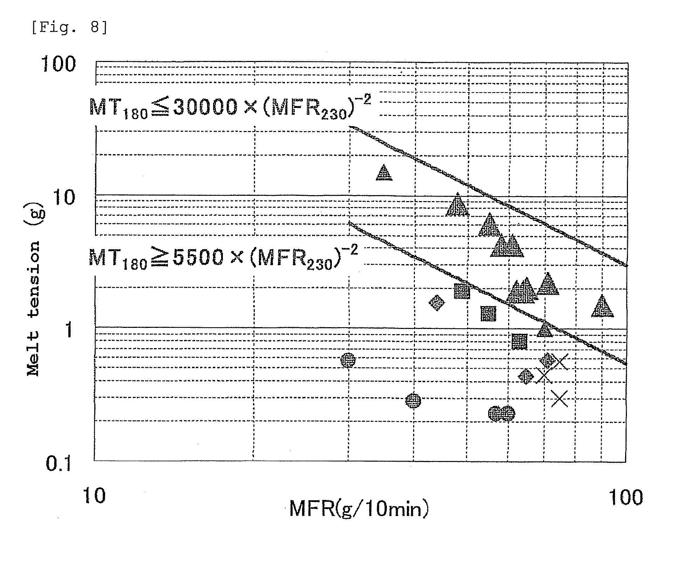

Fig. 8 is a plot diagram showing relations between the melt tension ($MT_{180}$) and the melt flow rate ($MFR_{230}$) of foaming polypropylene resin compositions in Examples and Comparative Examples. In Fig. 8:

▲: Examples 1 to 9 and Comparative Examples 6 and 7, high-molecular weight component-containing homopolypropylene B-1 added.

■: Comparative Examples 2 to 4, high-molecular weight component-containing homopolypropylene B-2 added.

X: Comparative Examples 1, 5 and 8, no high-molecular weight component-containing homopolypropylenes added.

♦: Comparative Examples 9 to 11, commercially available foaming polypropylene.

●: Comparative Examples 12 to 15, commercially available general polypropylene.

DESCRIPTION OF EMBODIMENTS

The present invention will be described in detail hereinbelow.

Foaming polypropylene resin compositions

A foaming polypropylene resin composition according to the invention contains at least a high-molecular weight component-containing impact polypropylene (AB) and a rubber component (C), and optionally contains an inorganic filler (D) as required. Similar effects can still be obtained when the high-molecular weight component-containing impact polypropylene (AB) is replaced by an impact polypropylene (A) and a high-molecular weight component-containing homopolypropylene (B).

The foaming polypropylene resin composition may further contain a high flowability homopolypropylene (E).

These components will be described below.

High-molecular weight component-containing impact polypropylenes (AB)

The high-molecular weight component-containing impact polypropylenes (AB) used in the invention contain 4.5 to 31.0 wt%, preferably 5 to 30 wt%, and more preferably 6 to 28 wt% of a propylene/ethylene copolymer that is identified as a normal temperature paraxylene soluble component.

The high-molecular weight component-containing impact polypropylenes (AB) contain 0.2 to 3.7 wt%, preferably 0.5 to 3.5 wt%, and more preferably 1.0 to 3.0 wt% of a propylene polymer component having an intrinsic viscosity [η] at 135°C in tetralin of 13.5 to 20.0 dl/g.

In the high-molecular weight component-containing impact polypropylenes (AB), a propylene homopolymer component and an optional polyethylene component are insoluble in normal temperature paraxylene whilst the propylene/ethylene random copolymer component is soluble in normal temperature paraxylene. The above content of the normal temperature paraxylene soluble component in the high-molecular weight component-containing impact polypropylenes (AB) leads to excellent balance between rigidity and impact resistance.

The high-molecular weight component-containing impact polypropylenes (AB) contain the propylene polymer component having the above intrinsic viscosity [η] (hereinafter, referred to as the propylene polymer component (X)) in the specific amount. As a result, the obtainable polypropylene resin compositions achieve high melt tension and controlled viscoelastic properties.

In particular, the intrinsic viscosity [η] of the propylene polymer components (X) is 13.5 to 20.0 dl/g, preferably 14 to 19 dl/g, and more preferably 15 to 18 dl/g. If the intrinsic viscosity [η] of the propylene polymer component (X) is less than 13.5 dl/g or if the weight ratio of the propylene polymer component (X) in the high-molecular weight component-containing impact polypropylene (AB) is below 0.2 wt%, insufficient melt tension may result and the obtainable foaming polypropylene resin composition may have insufficient foaming ability. If the intrinsic viscosity [η] of the propylene polymer component (X) exceeds 20 dl/g or if the weight ratio thereof in the high-molecular weight component-containing impact polypropylene (AB) is in excess of 3.7 wt%, the obtainable foaming polypropylene resin composition may have insufficient injection moldablity.

The high-molecular weight component-containing impact polypropylenes (AB) usually have a melt flow rate (MFR) of 40 to 190 g/10 min, preferably 50 to 170 g/10 min, and more preferably 60 to 150 g/10 min as measured at 230°C under 2.16 kg load in accordance with ASTM D-1238.

In the high-molecular weight component-containing impact polypropylenes (AB), the propylene/ethylene copolymer that is identified as a normal temperature paraxylene soluble component generally has an intrinsic viscosity [η] in the range of 3.5 to 10 dl/g, and preferably 3.5 to 8 dl/g. Further, in the high-molecular weight component-containing impact polypropylenes (AB), the content of the propylene/ethylene copolymer that is identified as a normal temperature paraxylene soluble component is about 4.5 to 31.0 wt%, preferably about 5 to 30 wt%, and more preferably about 8 to 27 wt%. Further, the ethylene content in the propylene/ethylene copolymer is preferably 20 to 45 wt%, and more preferably 25 to 40 wt%.

In the high-molecular weight component-containing impact polypropylenes (AB), the propylene homopolymer component that is a normal temperature paraxylene insoluble component preferably has excellent stereoregularity. For example, the isotactic pentad fraction (mmmm fraction) is preferably not less than 95.0%, and more preferably not less than 97.0%. When the propylene homopolymer component has this high isotactic pentad fraction, the resin has high crystallinity and the obtainable composition can give molded foams with high rigidity.

The isotactic pentad fraction (mmmm fraction) is measured by $^{13}$C-NMR. It indicates the ratio of isotactic pentad sequences in polypropylene molecular chains, and refers to the fraction of propylene monomer units found in the center of sequences in which five propylene monomer units are continuously meso-linked. In detail, the isotactic pentad fraction is calculated as a fraction of the mmmm peak relative to all the absorption peaks observed in a methyl carbon region of a $^{13}$C-NMR spectrum.

The high-molecular weight component-containing impact polypropylenes (AB) may contain a branched olefin polymer at not more than 0.1 wt%, and preferably not more than 0.05 wt%. The branched olefin polymer works as a nucleating agent for the high-molecular weight component-containing impact polypropylene (AB), and increases the isotactic pentad fraction of the propylene homopolymer component, resulting in improved moldability. Examples of such branched olefin polymers include homopolymers of branched olefins such as 3-methyl-1-butene, 3,3-dimethyl-1-butene, 3-methyl-1-pentene, 4-methyl-1-pentene and 3-methyl-1-pentene, and copolymers containing these olefins. Of these, 3-methyl-1-butene is preferred.

The high-molecular weight component-containing impact polypropylenes (AB) may be produced by any processes without limitation. For example, a process may be adopted in which propylene is homopolymerized in the first stage in the presence of a stereospecific olefin polymerization catalyst, and propylene is copolymerized with ethylene in the second stage in the presence of the catalyst, and optionally ethylene is homopolymerized in the third stage in the presence of the catalyst. The polymerization catalyst may be a Ziegler-Natta catalyst or a metallocene catalyst. Examples of the catalysts include catalyst systems that are composed of a solid catalyst component essentially containing magnesium, titanium, halogen and an electron donor, an organoaluminum compound and an electron donor.

The high-molecular weight component-containing impact polypropylenes (AB) may be used singly, or two or more kinds may be used in combination. When two or more kinds thereof are used, the high-molecular weight component-containing impact polypropylenes (AB) as a whole preferably satisfy the above properties.

Impact polypropylenes (A)

The impact polypropylenes (A) used in the invention preferably contain 5 to 30 wt%, and more preferably 8 to 27 wt% of a propylene/ethylene copolymer that is identified as a normal temperature paraxylene soluble component. In the impact polypropylenes (A), a propylene homopolymer component and an optional polyethylene component are insoluble in normal temperature paraxylene whilst the propylene/ethylene random copolymer component is soluble in normal temperature paraxylene. The above content of the normal temperature paraxylene soluble component in the impact polypropylenes (A) leads to excellent balance between rigidity and impact resistance.

The impact polypropylenes (A) preferably have a melt flow rate (MFR) of 50 to 200 g/10 min, and more preferably 55 to 150 g/10 min as measured at 230°C under 2.16 kg load in accordance with ASTM D-1238.

In the impact polypropylenes (A), the propylene/ethylene copolymer that is identified as a normal temperature paraxylene soluble component preferably has an intrinsic viscosity [η] in the range of 3.5 to 10 dl/g, and more preferably 3.5 to 8 dl/g. Further, in the impact polypropylenes (A), the content of the propylene/ethylene copolymer that is identified as a normal temperature paraxylene soluble component is preferably about 5 to 30 wt%, and more preferably about 8 to 27 wt%. Further, the ethylene content in the propylene/ethylene copolymer is preferably about 20 to 45 wt%, and more preferably about 25 to 40 wt%.

In the impact polypropylenes (A), the propylene homopolymer component that is a normal temperature paraxylene insoluble component preferably has excellent stereoregularity. For example, the isotactic pentad fraction (mmmm fraction) is preferably not less than 95.0%, and more preferably not less than 97.0%. When the propylene homopolymer component has this high isotactic pentad fraction, the resin has high crystallinity and the obtainable composition can give molded foams with high rigidity.

The isotactic pentad fraction (mmmm fraction) is measured by $^{13}$C-NMR. It indicates the ratio of isotactic pentad sequences in polypropylene molecular chains, and refers to the fraction of propylene monomer units found in the center of sequences in which five propylene monomer units are continuously meso-linked. In detail, the isotactic pentad fraction is calculated as a fraction of the mmmm peak relative to all the absorption peaks observed in a methyl carbon region of a $^{13}$C-NMR spectrum.

The impact polypropylenes (A) may contain a branched olefin polymer at not more than 0.1 wt%, and preferably not more than 0.05 wt%. The branched olefin polymer works as a nucleating agent for the impact polypropylene (A), and increases the isotactic pentad fraction of the propylene homopolymer component, resulting in improved moldability. Examples of such branched olefin polymers include homopolymers of branched olefins such as 3-methyl-1-butene, 3,3-dimethyl-1-butene, 3-methyl-1-pentene, 4-methyl-1-pentene and 3-methyl-1-pentene, and copolymers containing these olefins. Of these, 3-methyl-1-butene is preferred.

The impact polypropylenes (A) may be produced by any processes without limitation. For example, a process may be adopted in which propylene is homopolymerized in the first stage in the presence of a stereospecific olefin polymerization catalyst, and propylene is copolymerized with ethylene in the second stage in the presence of the catalyst, and optionally ethylene is homopolymerized in the third stage in the presence of the catalyst. The polymerization catalyst may be a Ziegler-Natta catalyst or a metallocene catalyst. Examples of the catalysts include catalyst systems that are composed of a solid catalyst component essentially containing magnesium, titanium, halogen and an electron donor, an organoaluminum compound and an electron donor.

The impact polypropylenes (A) may be used singly, or two or more kinds may be used in combination. When two or more kinds thereof are used, the impact polypropylenes (A) as a whole preferably satisfy the above properties.

High-molecular weight component-containing homopolypropylenes (B)

The high-molecular weight component-containing homopolypropylenes (B) used in the invention contain:

(i) preferably 5 to 22 wt%, and more preferably 8 to 20 wt% of a propylene homopolymer component (hereinafter the component (i)) having an intrinsic viscosity [η] at 135°C in tetralin of 13.5 to 20 dl/g, and
(ii) preferably 78 to 95 wt%, and more preferably 80 to 92 wt% of a propylene homopolymer component (hereinafter the component (ii)) having an intrinsic viscosity [η] at 135°C in tetralin of 0.5 to 3.0 dl/g.

The high-molecular weight component-containing homopolypropylene (B) is a linear propylene polymer that achieves high melt tension and controlled viscoelastic properties by containing the component (i), i.e., an ultrahigh-molecular weight propylene polymer component, in the specific amount.

The intrinsic viscosity of the component (i) is preferably 14.5 to 20 dl/g, and more preferably 15.5 to 18 dl/g. The weight ratio of the component (i) in the high-molecular weight component-containing homopolypropylene (B) is more preferably 10 to 20 wt%.

If the intrinsic viscosity of the component (i) is less than 13.5 dl/g or if the weight ratio of the component (i) is below 5 wt%, insufficient melt tension may result and the obtainable foaming polypropylene resin composition may have insufficient foaming ability. If the weight ratio of the component (i) exceeds 22 wt%, the obtainable foaming polypropylene resin composition may have insufficient injection moldability.

The intrinsic viscosity of the component (ii) is preferably 0.5 to 3.0 dl/g, more preferably 0.5 to 2.0 dl/g, and particularly preferably 0.5 to 1.5 dl/g. The weight ratio of the component (ii) is preferably 80 to 92 wt%, and more preferably 80 to 90 wt%.

If the intrinsic viscosity of the component (ii) is less than 0.5 dl/g or if the weight ratio of the component (ii) in (B) exceeds 95 wt%, the obtainable foaming polypropylene resin composition may have insufficient melt tension and may cause difficult foaming. If the weight ratio of the component (ii) is less than 80 wt%, the obtainable foaming polypropylene resin composition may have insufficient injection moldability.

The high-molecular weight component-containing homopolypropylenes (B) preferably have MFR as measured at 230°C under 2.16 kg load of not more than 7 g/10 min, and more preferably not more than 5 g/10 min. If the melt flow rate exceeds 7 g/10 min, the polymer will not adequately increase the melt tension of the obtainable foaming polypropylene resin compositions, and it may be difficult to produce uniform foams at a high expansion ratio.

The high-molecular weight component-containing homopolypropylenes (B) may be produced by any processes without limitation. For example, they may be produced by polymerizing propylene in two or more stages using an olefin polymerization catalyst composed of the following components (a) and (b) or the following components (a), (b) and (c):

(a) a solid catalyst component obtained by reducing titanium tetrachloride with an organoaluminum compound and treating the resultant titanium trichloride with an ether compound and an electron accepter;
(b) an organoaluminum compound;
(c) a cyclic ester compound.

Regarding the solid catalyst components (a), the organoaluminum compounds for reducing titanium tetrachloride include (i) alkylaluminum dihalides such as methylaluminum dichloride, ethylaluminum dichloride and n-propylaluminum dichloride, (ii) alkylaluminum sesquihalides such as ethylaluminum sesquichloride, (iii) dialkylaluminum halides such as dimethylaluminum chloride, diethylaluminum chloride, di-n-propylaluminum chloride and diethylaluminum bromide, (iv) trialkylaluminums such as trimethylaluminum, triethylaluminum and triisobutylaluminum, and (v) dialkylaluminum hydrides such as diethylaluminum hydride. Here, the alkyls are lower alkyls such as methyl, ethyl, propyl and butyl, and the halides are chloride and bromide, in particular the former halide.

The reduction reaction with the organoaluminum compounds for obtaining titanium trichloride is usually performed at temperatures in the range of -60 to 60°C, and preferably -30 to 30°C. The reduction reaction at temperatures below this range requires a long time. The reaction at temperatures in excess of the above range results in undesired partial over-reduction. The reduction reaction is preferably carried out in inert hydrocarbon solvents such as pentane, hexane, heptane, octane and decane.

The titanium trichloride resulting from the reduction of titanium tetrachloride with the organoaluminum compound is preferably subjected to ether treatment and electron acceptor treatment.

Preferred examples of the ether compounds for the ether treatment of the titanium trichloride include ether compounds in which the hydrocarbon residues are C2-8 linear hydrocarbons, such as diethyl ether, di-n-propyl ether, di-n-butyl ether, diisoamyl ether, dineopentyl ether, di-n-hexyl ether, di-n-octyl ether, di-2-ethylhexyl ether, methyl-n-butyl ether and ethyl isobutyl ether. Of these, di-n-butyl ether is particularly preferable.

Preferred examples of the electron acceptors for treating the titanium trichloride include halide compounds of Group III to IV and VIII elements of the periodic table, in detail titanium tetrachloride, silicon tetrachloride, boron trifluoride, boron trichloride, antimony pentachloride, gallium trichloride, iron trichloride, tellurium dichloride, tin tetrachloride, phosphorus trichloride, phosphorus pentachloride, vanadium tetrachloride and zirconium tetrachloride. In the preparation of the solid catalyst component (a), the titanium trichloride may be treated with a mixture of the ether compound and the electron acceptor, or may be treated with one of the treating agents and then with the other. The latter case is preferably adopted, and more preferably the ether treatment precedes the electron acceptor treatment.

It is generally preferable that the titanium trichloride is cleaned with a hydrocarbon prior to the ether treatment and the electron acceptor treatment. The ether treatment of the titanium trichloride is performed by bringing the titanium trichloride in contact with the ether compound. It is advantageous that the titanium trichloride is contacted with the ether compound in the presence of a diluent. Suitable diluents include inert hydrocarbon compounds such as hexane, heptane, octane, decane, benzene and toluene. The temperature in the ether treatment is preferably 0 to 100°C. The treatment time is not particularly limited, but is usually in the range of 20 minutes to 5 hours.

The usage amount of the ether compound is generally in the range of 0.05 to 3.0 mol, and preferably 0.5 to 1.5 mol per 1 mol of the titanium trichloride. If the ether compound is used in an amount below this range, the obtainable catalyst will not be able to increase sufficiently the stereoregularity of polymers. If the amount is in excess of the above range, the stereoregularity of polymers may be sufficiently increased but the yield is lowered. The titanium trichloride treated with the organoaluminum compound and the ether compound is in a strict sense a composition based on titanium trichloride.

In the preparation of the high-molecular weight component-containing homopolypropylenes (B), Solvay type titanium trichloride may be suitably used as the solid catalyst component (a).

Examples of the organoaluminum compounds (b) include the compounds described hereinabove.

Examples of the cyclic ester compounds (c) include γ-lactone, δ-lactone and ε-lactone. Of these, ε-lactone is preferred.

The olefin polymerization catalyst used in the production of the high-molecular weight component-containing homopolypropylenes (B) may be prepared by mixing the components (a) to (c).

In the production of the high-molecular weight component-containing homopolypropylenes (B) in two or more polymerization stages, it is preferable that propylene is polymerized in the first stage in the absence of hydrogen. Here, the absence of hydrogen means that hydrogen is substantially absent, including the complete absence of hydrogen and the presence thereof in a very trace amount (for example, about 10 mol ppm). In other words, trace hydrogen may be present as long as the propylene polymer or the propylene copolymer from the first stage has an intrinsic viscosity of not less than 10 dl/g as measured at 135°C in tetralin.

The polymerization of propylene in the absence of hydrogen gives an ultrahigh molecular weight propylene polymer as the component (i). In a preferred embodiment of the production conditions for the component (i), the raw material monomer is slurry polymerized in the absence of hydrogen at a polymerization temperature of 20 to 80°C, more preferably 40 to 70°C, under a polymerization pressure of atmospheric pressure to 1.47 MPa, preferably 0.39 to 1.18 MPa.

In the production of the high-molecular weight component-containing homopolypropylenes (B), the component (ii) that is a low-molecular weight component is preferably produced in the second or later stage. The production conditions for the component (ii) are not particularly limited as long as the aforementioned olefin polymerization catalyst is used. In a preferred embodiment, the raw material monomer is polymerized in the presence of hydrogen as a molecular weight modifier at a polymerization temperature of 20 to 80°C, more preferably 60 to 70°C, under a polymerization pressure of atmospheric pressure to 1.47 MPa, preferably 0.19 to 1.18 MPa.

Preferably, polymerizations are performed under the above conditions while appropriately controlling the reaction time or the like so as to synthesize 5 to 22 wt% of a propylene polymer component having an intrinsic viscosity [η] at 135°C in tetralin of 13.5 to 20 dl/g in the first polymerization stage, and 78 to 95 wt% of a propylene polymer component having an intrinsic viscosity [η] at 135°C in tetralin of 0.5 to 3.0 dl/g in the second polymerization stage.

In the production of the high-molecular weight component-containing homopolypropylenes (B), prepolymerization may be carried out before the polymerizations. The powder morphology may be maintained favorably by performing the prepolymerization. The prepolymerization may be preferably made by polymerizing 0.001 to 100 g, more preferably 0.1 to 10 g of propylene per 1 g of the solid catalyst component at a polymerization temperature of 0 to 80°C, more preferably 10 to 60°C.

A process described in WO 2005/097842 may be adopted to produce the high-molecular weight component-containing homopolypropylenes (B).

Rubber components (C)

The rubber components (C) used in the invention are not limited as long as the rubber components have excellent compatibility with the high-molecular weight component-containing impact polypropylenes (AB), or with the impact polypropylenes (A) and the high-molecular weight component-containing homopolypropylenes (B). Preferred rubber components (C) in the invention are ethylene/C3-10 α-olefin copolymers. Examples of the α-olefins copolymerized with ethylene include C3-10 α-olefins such as propylene, 1-butene, 1-pentene, 1-hexene, 4-methyl-1-pentene, 3-methyl-1-pentene, 1-heptene, 1-octene, 1-nonene and 1-decene. A single or two or more of these olefins may be used. Of these α-olefins, 1-butene and 1-octene are particularly preferable.

The rubber components (C) used in the invention preferably have MFR measured at 190°C under 2.16 kg load in accordance with ASTM D-1238 of 1 to 50 g/10 min, more preferably 10 to 40 g/10 min, and a density of 0.86 to 0.92 g/cm³.

Preferred rubber components (C) are ethylene/α-olefin elastomers produced with a single site catalyst such as a metallocene catalyst. The ethylene/α-olefin elastomers produced with a single site catalyst such as a metallocene catalyst have a low ratio of the weight average molecular weight to the number average molecular weight (a narrow molecular weight distribution Mw/Mn) and a narrow ethylene/α-olefin copolymer composition distribution, and therefore the obtainable compositions show uniform and stable flow properties (rheology) and dispersion properties (morphology).

Specific examples of the single site catalysts for use in the invention include ENGAGE 8407 manufactured by The Dow Chemical Company and A-35070S manufactured by Mitsui Chemicals, Inc. The elastomeric components, however, are not limited thereto.

The rubber components (C) may be used singly, or two or more kinds may be used in combination. The rubber component (s) as a whole preferably satisfy the above MFR and density.

Inorganic fillers (D)

The inorganic fillers (D) for use in the invention are not particularly limited. Examples include heavy calcium carbonate, light calcium carbonate, talc, glass fibers, magnesium carbonate, mica, kaolin, calcium sulfate, barium sulfate, titanium white, white carbon, carbon black, aluminum hydroxide and magnesium hydroxide. These inorganic fillers may be used singly, or two or more kinds may be used in combination. Of these, talc is most preferable.

The shapes of the inorganic fillers (D) are not particularly limited. However, inorganic fillers having an average particle diameter determined by a laser method of 0.5 to 20 μm, and preferably 1.0 to 15 μm may be suitably used.

High flowability homopolypropylenes (E)

The high flowability homopolypropylenes (E) for use in the invention preferably have MFR of 200 to 1000 g/10 min, more preferably 220 to 800 g/10 min, and still more preferably 240 to 700 g/10 min as measured at 230°C under 2.16 kg load in accordance with ASTM D-1238. When the high flowability homopolypropylene (E) has this MFR, the MFR and consequently the flowability of the obtainable foaming polypropylene resin composition may be increased.

Other components

The foaming polypropylene resin compositions of the invention may contain additives as required while still achieving the objects of the invention. Examples of the additives include nucleating agents, antioxidants, hydrochloric acid absorbers, heat stabilizers, weathering stabilizers, light stabilizers, UV absorbents, lubricants, antistatic agents, flame retardants, pigments, dyes, dispersants, copper inhibitors, neutralizers, plasticizers, crosslinking agents, flow improvers such as peroxides, weld strength improvers, natural oils, synthetic oils and waxes.

Foaming polypropylene resin compositions

The chemical makeup of the foaming polypropylene resin compositions according to the invention, based on 100 parts by weight of the total of the high-molecular weight component-containing impact polypropylene (AB), the rubber component (C) and the inorganic filler (D) are: 50 to 90 parts by weight of (AB), 10 to 30 parts by weight of (C), and 0 to 20 parts by weight of (D); preferably 48 to 87 parts by weight of (AB), 10 to 25 parts by weight of (C), and 1 to 20 parts by weight of (D); and more preferably 45 to 85 parts by weight of (AB), 10 to 20 parts by weight of (C), and 3 to 18 parts by weight of (D).

When the high-molecular weight component-containing impact polypropylene (AB) is replaced by the impact polypropylene (A) and the high-molecular weight component-containing homopolypropylene (B), the chemical makeup of the foaming polypropylene resin compositions based on 100 parts by weight of the total of the impact polypropylene (A), the high-molecular weight component-containing homopolypropylene (B), the rubber component (C) and the inorganic filler (D) are: 45 to 87 parts by weight of (A), 2 to 15 parts by weight of (B), 10 to 30 parts by weight of (C), and 0 to 20 parts by weight of (D); preferably 47 to 86 parts by weight of (A), 3 to 12 parts by weight of (B), 10 to 25 parts by weight of (C), and 1 to 20 parts by weight of (D); and more preferably 52 to 82 parts by weight of (A), 3 to 10 parts by weight of (B), 10 to 20 parts by weight of (C), and 3 to 18 parts by weight of (D).

The foaming polypropylene resin compositions of the invention usually have a melt flow rate of 30 to 200 g/10 min, preferably 40 to 120 g/10 min, and particularly preferably 50 to 100 g/10 min as measured in accordance with ASTM D-1238 (230°C, 2.16 kg load) ($MFR_{230}$) without containing foaming agents. Such compositions are suited for injection foam molding, and have good moldability and can be suitably used in injection foam molding in thin cavities.

The foaming polypropylene resin compositions of the invention are suited for foam molding in which they are expanded by the addition of foaming agents, and are particularly suited for injection foam molding. The kinds and amounts of the foaming agents may be determined appropriately in consideration of the amount of gas from the foaming agents, the desired expansion ratio and the like depending on the chemical makeup of the resin compositions and the desired properties of the molded foams.

The foaming polypropylene resin compositions of the invention preferably satisfy the relations (1) to (3) below in which $MFR_{230}$ is the melt flow rate of the composition measured in accordance with ASTM D-1238 (230°C, 2.16 kg load) without containing foaming agents, and $MT_{180}$ is the melt tension measured as a take-off load (g) when the composition is extruded at 15 mm/min from a capillary 2.095 mm in diameter and 8 mm in length at 180°C and the strand is taken up at 15 m/min.

$$MT_{180} \geq 5500 \times (MFR_{230})^{-2} \cdots (1)$$

$$MT_{180} \leq 30000 \times (MFR_{230})^{-2} \cdots (2)$$

$$40 \leq MFR_{230} \leq 120 \cdots (3)$$

The equation (1) is preferably represented by the equation (4), and more preferably the equation (5).

$$MT_{180} \geq 6000 \times (MFR_{230})^{-2} \cdots (4)$$

$$MT_{180} \geq 6500 \times (MFR_{230})^{-2} \cdots (5)$$

The equation (2) is preferably represented by the equation (6), and more preferably the equation (7).

$$MT_{180} \leq 28000 \times (MFR_{230})^{-2} \quad \cdots \quad (6)$$

$$MT_{180} \leq 25000 \times (MFR_{230})^{-2} \quad \cdots \quad (7)$$

The equation (3) is preferably represented by the equation (8), and more preferably the equation (9).
$$42 \leq MFR_{230} \leq 110 \quad \cdots \quad (8)$$

$$45 \leq MFR_{230} \leq 100 \quad \cdots \quad (9)$$

Processes for producing injection-molded foams

In the process for producing injection-molded foams according to the invention, molded foams are produced using the aforementioned foaming polypropylene resin composition and a foaming agent.

The foaming agents used in the processes for the production of injection-molded foams are not particularly limited. Chemical foaming agents and physical foaming agents may be used. Examples include solvent type foaming agents, decomposable foaming agents, gaseous physical foaming agents, and combinations thereof.

The solvent type foaming agents are substances that are absorbed or dissolved in the molten material resin by being added thereto, generally by injection, at a cylinder part of an injection molding apparatus and are thereafter evaporated in an injection mold to function as foaming agents. Examples thereof include low-boiling aliphatic hydrocarbons such as propane, butane, neopentane, heptane, isohexane, hexane, isoheptane and heptane, and low-boiling fluorine-containing hydrocarbons such as chlorofluorocarbon.

The decomposable foaming agents are compounds that are mixed in the material resin composition beforehand and, after fed to an injection molding apparatus, are decomposed under cylinder temperature conditions in the injection molding apparatus to release gas such as carbon dioxide or nitrogen gas. Inorganic foaming agents and organic foaming agents may be used. Organic acids such as citric acid and organic acid metal salts such as sodium citrate may be used together as foaming auxiliaries to facilitate the gas production.

Specific examples of the decomposable foaming agents include the following compounds:

(1) inorganic foaming agents: sodium bicarbonate, sodium carbonate, ammonium bicarbonate, ammonium carbonate, ammonium nitrite;
(2) organic foaming agents: (a) N-nitroso compounds: N,N'-dinitrosoterephthalamide, N,N'-dinitrosopentamethylenetetramine; (b) azo compounds: azodicarbonamide, azobisisobutyronitrile, azocyclohexylnitrile, azodiaminobenzene, barium azodicarboxylate; (c) sulfonylhydrazide compounds: benzenesulfonyl hydrazide, toluenesulfonyl hydrazide, p,p'-oxybis(benzenesulfenyl hydrazide), diphenylsulfone-3,3'-disulfonyl hydrazide; (d) azide compounds: calcium azide, 4,4'-diphenyldisulfonyl azide, p-toluenesulfonyl azide.

The gaseous foaming agents are not particularly limited, and general physical foaming agents may be used. Examples include inert gases such as carbon dioxide, nitrogen, argon, helium, neon and astatine. Of these, carbon dioxide, nitrogen and argon are most advantageous because they do not require vaporization, are inexpensive, and are very unlikely to cause environmental pollution or fire. The gaseous foaming agents may be used in the supercritical state.

These foaming agents may be used singly, or two or more kinds may be used in combination. The foaming agents may be blended in the resin composition beforehand, or may be injected through a part on a cylinder during injection molding.

Of the foaming agents, carbonates or hydrogen carbonates such as sodium hydrogen bicarbonate are preferably used, desirably in combination with organic carboxylic acids as foaming auxiliaries. The amounts of the carbonate or hydrogen carbonate and the organic carboxylic acid are preferably 30 to 65 parts by weight for the carbonate or hydrogen carbonate and 35 to 70 parts by weight for the organic carboxylic acid, wherein the total of these two is 100 parts by weight. In an embodiment, a masterbatch containing the foaming agent and the foaming auxiliary may be prepared beforehand and be blended with the remaining portion of the foaming polypropylene resin composition.

The amount of the foaming agents may be determined appropriately depending on the required properties of molded foams and in view of the amount of gas generated from the foaming agents and the desired expansion ratio. The amount is usually in the range of 0.1 to 10 parts by weight, preferably 0.4 to 5.0 parts by weight, and more preferably 0.7 to 3.0 parts by weight based on 100 parts by weight of the foaming polypropylene resin composition. This amount of the foaming agents ensures that the obtainable molded foams have a uniform cell diameter and the cells are uniformly dispersed.

In the processes for injection-molded foams of the invention, the foaming agent is added to the polypropylene resin composition and the mixture is plasticized and kneaded in an injection molding apparatus to a plasticized resin composition, which is thereafter injection-molded and foamed. The foaming agent may be added to the polypropylene resin composition before they are supplied to an injection molding apparatus. Alternatively, the foaming agent may be fed to an injection molding apparatus in which the polypropylene resin composition is melt-kneaded.

To produce inj ection-molded foams, the plasticized resin composition is injected from the injection molding apparatus to fill a cavity of a mold and thereafter the plasticized resin composition is foamed while increasing the volume of the cavity.

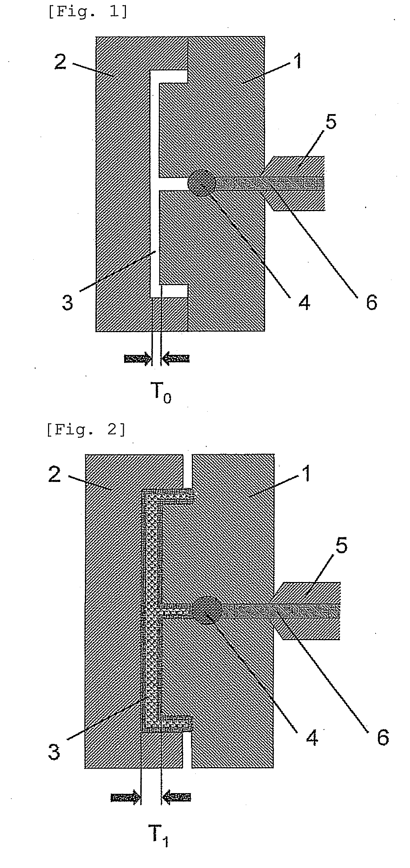

The mold used in the injection foam molding is composed of a fixed mold and a movable mold. These molds are preferably clamped when the plasticized resin composition is injected thereto. The volume of the cavity may be increased by moving backward (core-back) the movable mold to extend the cavity. In particular, the cavity extension preferably takes place after the passage of an appropriate time after the injection and filling. A cavity structure composed of a fixed mold and a movable mold will be described below with reference to Figs. 1 and 2.

The initial position of a movable mold 2 (Fig. 1) is such that the movable mold 2 is most approximate to a fixed mold 1, namely, the mold is clamped, and the cavity volume is substantially the same as the volume of the molten and still unexpanded resin composition used in one molding operation. The cavity is shaped similar to the final product. In the invention, the length of a cavity 3 in the extension direction between the fixed mold 1 and the movable mold 2 at the initiation of injection, in other words, the cavity clearance ($T_0$) in the mold at the start of injection is preferably in the range of 1.0 to 2.0 mm, more preferably 1.0 to 1.8 mm, and still more preferably 1.0 to 1.5 mm. If the cavity clearance ($T_0$) is less than 1.0 mm, the cavity is narrow and the plasticized resin composition may not be injected to fill the cavity sufficiently in the event that the plasticized resin composition has an increased viscosity or is solidified. If the resin composition is injected at high pressure to achieve sufficient filling, the resin is quenched by the mold and cannot be foamed sufficiently even when the mold is moved backward, resulting in foaming failure. Further, high pressure injection increases equipment costs to prevent burrs.

The time of injection of the plasticized resin composition to the mold cavity is not particularly limited, but is preferably about 0. 7 to 5.0 seconds, and more preferably about 0.7 to 4.0 seconds. In a preferred embodiment, a delay time of 0 to 3 seconds, and more preferably 0.5 to 3 seconds is allowed after the completion of the injection, and the movable mold constituting the cavity is thereafter moved backward (core-back) at a rate of 1 to 50 mm/sec, and more preferably 1 to 20 mm/sec, thereby increasing the cavity volume (Fig. 2). This delay time permits controlling the thickness of the skin layer. With a longer delay time, the thickness of the skin layer is increased and thereby mechanical properties such as rigidity are enhanced. The extension ratio of the cavity volume is usually 1.1 to 4.0 times, preferably 1.5 to 3.0 times, and more preferably 2.0 to 2.5 times.

After the movable mold 2 has been backed, the length ($T_1$) in the extended direction in a cross section of the cavity 3 has a ratio to the cavity clearance To, ($T_1/T_0$), of 1.1 to 5.0, and preferably 1.5 to 4.0. If the $T_1/T_0$ ratio is less than 1.1, the obtainable product is almost unexpanded and cannot achieve the desired rigidity.

In the core-back, the core (the movable mold) travel speed may vary depending on the thickness of the molded articles, the kind of the resins or the foaming agents, the mold temperature and the resin temperature. When carbon dioxide as a physical foaming agent and usual polypropylene are used, the core travel speed is preferably about 0.5 to 30 mm/sec. If the core travel speed is excessively low, the resin is solidified before completing the core-back and a sufficient expansion ratio cannot be obtained. At an excessively high speed, the cell formation and growth cannot keep up with the traveling of the core, and the cells are broken to deteriorate the appearance of the molded foams.

The temperatures of the injected resin and the mold may vary depending on the thickness of the molded articles, the kind of the resins, and the kind or amount of the foaming agents. Typical temperatures in the molding of polypropylene resins may be used. It is recommended that the mold temperature is increased from the normal level when producing thin molded foams or molded foams at a high expansion ratio. For example, the temperature of the injected resin may be 170 to 250°C, and preferably 180 to 220°C. The temperature of the fixed mold and the movable mold may be 10 to 100°C, and preferably 30 to 80°C. The pressure in the mold may be 5 to 50 MPa, and preferably 10 to 30 MPa. The injection pressure is usually 10 to 250 MPa, and preferably 12 to 200 MPa.

According to the present invention, the resin composition is injected to a cavity at a time and is thereafter foamed, whereby the resin in contact with the mold is solidified faster than the inner resin. Consequently, the resultant injection-molded foams have an unexpanded solid skin layer on the surface and an expanded layer in the core. The unexpanded solid skin layer on the surface of the injection-molded foams provides and maintains a solid product shape. Further, the solid skin layer can provide higher rigidity of the molded foams. The smoothness and rigidity of the skin layer ensure good appearance even when the cell shape, the cell density or the expansion ratio is more or less nonuniform in the expanded layer inside the molded foam. The thickness of the solid skin layer is not particularly limited, but is preferably 0.1 to 0.5 mm, and more preferably 0.3 to 0.5 mm. The thickness of the inner expanded layer is preferably 2 to 4 mm, and more preferably 1.8 to 3.5 mm. The timing of carrying out the core-back to form the skin layer in the above thickness varies depending on the kind of the resins or the foaming agents, the mold temperature and the resin temperature. When usual polypropylene is used, the core-back is preferably started after about 0 to 3 seconds, and more preferably after about 0.5 to 3 seconds after the completion of the injection and filling. If the time is excessively short between the completion of the injection/filling and the core-back starting, the skin layer does not have a sufficient thickness. If the time is excessively long, the resin solidification proceeds and a sufficient expansion ratio cannot be obtained by the core-back.

The expansion ratio may be controlled appropriately by the resin temperature, the injection rate, the delay time between the injection/filling completion and the start of the core-back, the core-back length, the core travel speed and the cooling time after the core-back completion. The expansion ratio is preferably 1.5 to 3.0 times. The core-back process may be performed in several stages, in which case the cell structure or edge shapes of the molded foams can be controlled. The expansion ratio exclusive for the expanded layer is preferably 2 to 6 times, and more preferably 3 to 5 times.

In the invention, hot runners, shut-off nozzles and valve gates generally used in injection molding may be employed. The valve gates or hot runners prevent the occurrence of waste resins such as runners and also prevent the foaming propylene resin composition from leaking from the mold runners to the cavity to cause defects on the molded foams manufactured in the subsequent cycle.

After the foaming, the molded foams may be cooled directly and taken out afterward. In an embodiment, the mold may be slightly tightened to control the contact between the molded foam and the mold and the cooling may then be accelerated thereby to shorten the molding cycles and to obtain molded foams having the desired cell shape and the dent-proof.

According to the production processes of the invention, injection-molded foams having a thickness of, for example, about 1.2 to 5.0 mm may be favorably produced. When the injection-molded foam has closed cells, the average cell diameter is about 0.01 to 1.0 mm. Depending on the shape or use application of the molded foams, the cell diameter may be several millimeters or some of the cells may be connected to form an open cell. In a further embodiment, the injection-molded foams obtainable by the processes of the invention have a cross section in parallel with the direction in which the movable mold has been moved backward wherein a central region accounting for 10 to 50% of the expanded layer contains cells at least 70% of which have a ratio "cell diameter perpendicular to the solid skin layer/cell diameter along the solid skin layer" of 0.7 to 1.4, and other regions of the expanded layer contain cells which have a ratio "cell diameter perpendicular to the solid skin layer/cell diameter along the solid skin layer" of 0.1 to 0.9. This large number of cells present along the skin layers can suppress the conductance of heat by radiation or convection within the expanded layer, and the molded foams achieve reduced thermal conductivity between the front and back surfaces of the molded foams.

At a high expansion ratio, a plurality of cells combine together to form open cells and the molded foams become hollow. In such cases, the resin forms pillars in the hollow, and the molded foams are consequently very lightweight and highly rigid.

Such molded foams may be suitably used in various applications including automobile interior and exterior parts, substitutes for cardboards or the like, electric appliance and building materials. In particular, they are suited in applications related to automobile interior parts and automobile exterior parts.

EXAMPLES

The present invention will be described in detail by presenting examples hereinbelow without limiting the scope of the invention.

[Injection foam molding process]

In Examples and Comparative Examples, injection foam molding was performed under the following conditions.

- Injection molding apparatus: MD350S-III manufactured by UBE MACHINERY CORPORATION, LTD. (clamping force: 350 t)
- Mold:

Cavity size: 400 mm in length, 200 mm in width, 1.2 mm in thickness
Gate: direct gate at the center of the cavity
Injection resin temperature: 210°C
Mold surface temperature: 45°C
Injection time: 1.0 second (from the initiation of injection to the completion of injection of the molten resin)

- Foam molding conditions

Mold cavity clearance at completion of the foaming step: 3.0 mm
Core-back speed: 20 mm/sec
Delay time from injection completion to starting of expansion: 0 to 1 second
Mold cavity clearance ($L_0$) at injection starting: 1.2 mm

[Measurement and evaluation methods]

In Examples and Comparative Examples, properties of the resin compositions and molded foams obtained were measured or evaluated by the following methods.

Properties of high-molecular weight component-containing homopolypropylenes (B)

The material balance was studied using the flowmeter integrated values of propylene which had been continuously supplied during polymerization to determine the weight ratio of the component (i) (a propylene homopolymer component having an intrinsic viscosity [η] at 135°C in tetralin of 13.5 to 20 dl/g) and the component (ii) (a propylene homopolymer component having an intrinsic viscosity [η] at 135°C in tetralin of 0.5 to 3.0 dl/g) in the high-molecular weight component-containing homopolypropylene (B). The intrinsic viscosity [η] of (B) and (i) was determined in tetralin at 135°C, and the intrinsic viscosity $[\eta]_2$ of (ii) was calculated from the following equation.
$$[\eta]_2 = ([\eta]_{total} \times 100 - [\eta]_1 \times W_1)/W_2$$

$[\eta]_{total}$: intrinsic viscosity of the total propylene polymer
$[\eta]_1$: intrinsic viscosity of (i)
$W_1$: weight ratio (wt%) of (i)
$W_2$: weight ratio (wt%) of (ii)

The intrinsic viscosity [η] was measured at 135°C in tetralin solvent using automatic viscometer VMR-053 manufactured by RIGO CO., LTD.

•Melt tension (MT)

The melt tension ($MT_{180}$) was measured as a load (g) when the composition was extruded at 15 mm/min from a capillary 2. 095 mm in diameter and 8 mm in length at 180°C and the strand was taken up at 15 m/min. A capillograph equipped with a melt tension measuring attachment (capillograph 1B manufactured by Toyo Seiki Seisaku-Sho, Ltd.) was used.

•Flowability (melt flow rate: MFR)

The melt flow rate was measured at 230°C under 2.16 kg load or at 190°C under 2.16 kg load (for rubber components (C)) in accordance with ASTM D-1238.
The MFR of the foaming polypropylene resin compositions was measured in accordance with ASTM D-1238 (230°C, 2.16 kg load) without containing foaming agents.
The MFR measured at 190°C is represented by $MFR_{190}$, and the MFR at 230°C is represented by $MFR_{230}$.

• Density of rubber components (C)

The density of rubber components was measured in accordance with ISO-1183 (JIS K7112).

• Definition of expansion ratio

The expansion ratio was determined from the thickness ratio $t/t_0$ wherein to was the thickness before expansion and t was the thickness of the molded foam.

• Properties of molded foams

(1) Expansion ratio achievement

Whether the x2.5 expansion ratio was achieved or not was evaluated based on the following criteria.

A: The thickness ($t_0$) before expansion was 1.2 mm, and the thickness (t) of the molded foam obtained was 3.0 mm or more. The x2.5 expansion ratio was achieved.
C: The thickness ($t_0$) before expansion was 1.2 mm, and the thickness (t) of the molded foam obtained was less than 3.0 mm. The x2.5 expansion ratio was not achieved.

(2) Cell shape

A cross section of the molded foams was evaluated under the following criteria.

A: Closed cells with no broken cells
B: Few open cells due to cell breakage
C: Open cells due to cell breakage, and cracks in the expanded layer

(3) Planarity

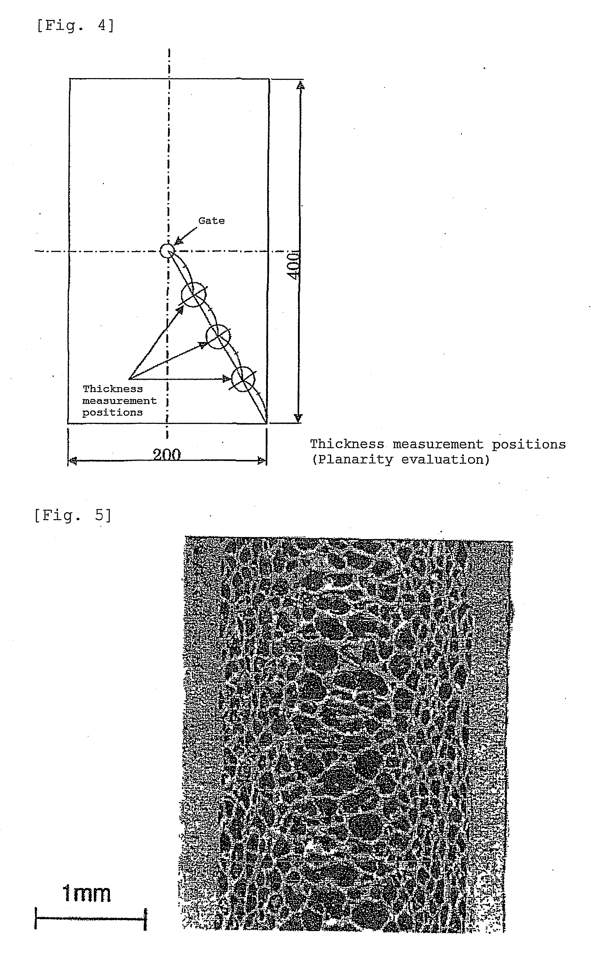

The planarity of the molded foams was evaluated. The molded foam was diagonally cut from the gate mark to a corner. The diagonal line was divided into four equal lengths. The thickness was measured at the three divisional points (see the thickness measurement positions in Fig. 4) to evaluate the planarity.

A: The thickness varied less than $\pm0.2$ mm in the entire surface of the molded foam.

B: The thickness varied from $\pm0.2$ mm to less than $\pm0.3$ mm in the entire surface of the molded foam.

C: The thickness varied $\pm0.3$ mm or more in the entire surface of the molded foam.

(4) Molding stability

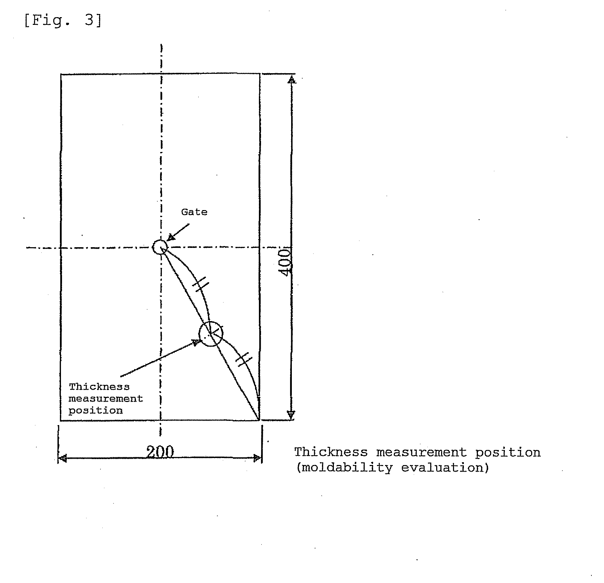

The molding stability was compared by repeating a molding process in which the composition was injected to a thickness of 1.2 mm to evaluate the thin moldability and to measure the load on the molding apparatus by the injection pressure, and further the thickness of the molded foam was measured in the middle between the gate mark and a corner (see the thickness measurement position in Fig. 3).

A: The molded product was free from short shots, and the injection pressure during the molding was not more than the maximum injection pressure of the injection molding apparatus (250 MPa); and the repetition error of the thickness of the molded product was not more than $\pm0.2$ mm.
B: The molded product was free from short shots, and the injection pressure during the molding was not more than the maximum injection pressure of the injection molding apparatus (250 MPa) ; or the repetition error of the thickness of the molded product was more than $\pm0.2$ mm but not more than $\pm0.3$ mm.
C: The molded product had a short shot, or the injection pressure during the molding exceeded the maximum injection pressure of the injection molding apparatus (250 MPa); or the repetition error of the thickness of the molded product was more than $\pm0.3$ mm.

[Example 1]

A foaming resin composition was prepared by mixing and pelletizing:

66 parts by weight of a Ziegler-Natta catalyzed propylene/ethylene block copolymer (component A) which had

$MFR_{230}$ of 110 g/10 min and in which $MFR_{230}$ of a normal temperature paraxylene insoluble component ($X_{insol}$) was 240 g/10 min, the isotactic pentad fraction of a propylene homopolymer component was 97.5%, the content of a normal temperature paraxylene soluble component ($X_{sol}$) was 12 wt%, and [η] of the normal temperature paraxylene soluble component ($X_{sol}$) was 4.0 dl/g;

3 parts by weight of a high-molecular weight homopolypropylene (component B-1) (containing 19 wt% of a component with an intrinsic viscosity [η] at 135°C in tetralin of 16 dl/g, and 81 wt% of a component with an intrinsic viscosity $[η]_2$ of 0.57 dl/g, [η] total = 3. 5 dl/g) ;

17 parts by weight of a single-site catalyzed, low-molecular weight ethylene/1-butene copolymer (EBR) (A-35070S manufactured by Mitsui Chemicals, Inc.) (component C-1) having a density of 0.87 $g/cm^3$ and $MFR_{190}$ of 35 g/10 min; and

14 parts by weight of fine powdery talc (component D) (average particle diameter: 4.1 μm).

The component (B-1) had been prepared in accordance with the polymerization process in Example 3 of WO 2005/097842, in detail by a two-stage polymerization in which propylene was polymerized in the absence of hydrogen and was polymerized in the presence of hydrogen using a prepolymerized catalyst that had been prepared by prepolymerizing a Solvay type titanium trichloride catalyst (manufactured by Tosoh Finechem Corporation) with propylene using diethylaluminum chloride.

A foaming agent masterbatch (POLYTHLENE EE25C manufactured by EIWA CHEMICAL IND. CO., LTD.) was provided which was prepared by kneading a low-density polyethylene with a sodium bicarbonate/sodium citrate inorganic foaming agent at a foaming agent concentration of 30 wt%. 100 Parts by weight of the injection foaming resin composition was dry blended with 6 parts by weight of the masterbatch (so that the concentration of the foaming agent components was 1.8 wt%). The blend was injection molded under the above-described conditions to give a molded foam. The properties of the molded foam were evaluated, the results being set forth in Table 1. A cross sectional picture of the molded foam is shown in Fig. 5.

[Example 2]

A foaming resin composition was produced in the same manner as in Example 1, except that the component (A) and the component (B-1) were used in amounts of 64 parts by weight and 5 parts by weight, respectively. The composition was foamed and the molded foam was evaluated in the same manner as in Example 1. The results are set forth in Table 1.

[Example 3]

A foaming resin composition was produced in the same manner as in Example 1, except that the component (A) and the component (B-1) were used in amounts of 62 parts by weight and 7 parts by weight, respectively. The composition was foamed and the molded foam was evaluated in the same manner as in Example 1. The results are set forth in Table 1.

[Example 4]

A foaming resin composition was produced in the same manner as in Example 1, except that the component (A) and the component (B-1) were used in amounts of 60 parts by weight and 9 parts by weight, respectively. The composition was foamed and the molded foam was evaluated in the same manner as in Example 1, except that the foaming agent masterbatch was used in an amount of 9 parts by weight based on 100 parts by weight of the resin composition. The results are set forth in Table 1.

[Example 5]

A foaming resin composition was produced in the same manner as in Example 1, except that the component (A) and the component (B-1) were used in amounts of 61 parts by weight and 5 parts by weight, respectively, and that the component (C-1) was replaced by 20 parts by weight of a component (C-2): a single-site catalyzed ethylene/octene copolymer (EOR) (ENGAGE 8407 manufactured by The Dow Chemical Company) having $MFR_{190}$ of 30 g/10 min and a density of 0.87 $g/cm^3$. The composition was foamed and the molded foam was evaluated in the same manner as in Example 1. The results are set forth in Table 1.

[Example 6]

A foaming resin composition was produced in the same manner as in Example 5, except that the component (A) and the component (D) were used in amounts of 74 parts by weight and 1 part by weight, respectively. The composition was foamed and the molded foam was evaluated in the same manner as in Example 1. The results are set forth in Table 1.

[Example 7]

A foaming resin composition was produced in the same manner as in Example 6, except that the component (A) was used in an amount of 75 parts by weight and the component (D) was not used. The composition was foamed and the molded foam was evaluated in the same manner as in Example 1. The results are set forth in Table 1.

[Example 8]

A molded foam was produced and evaluated in the same manner as in Example 1, except that the component (A), the component (B-1) and the component (E) were used in amounts of 59 parts, 4 parts and 6 parts by weight, respectively. The results are set forth in Table 1.

[Example 9]

A molded foam was produced and evaluated in the same manner as in Example 8, except that the component (A), the component (D) and the component (E) were used in amounts of 58 parts, 4 parts and 17 parts by weight, respectively. The results are set forth in Table 1.

[Comparative Example 1]

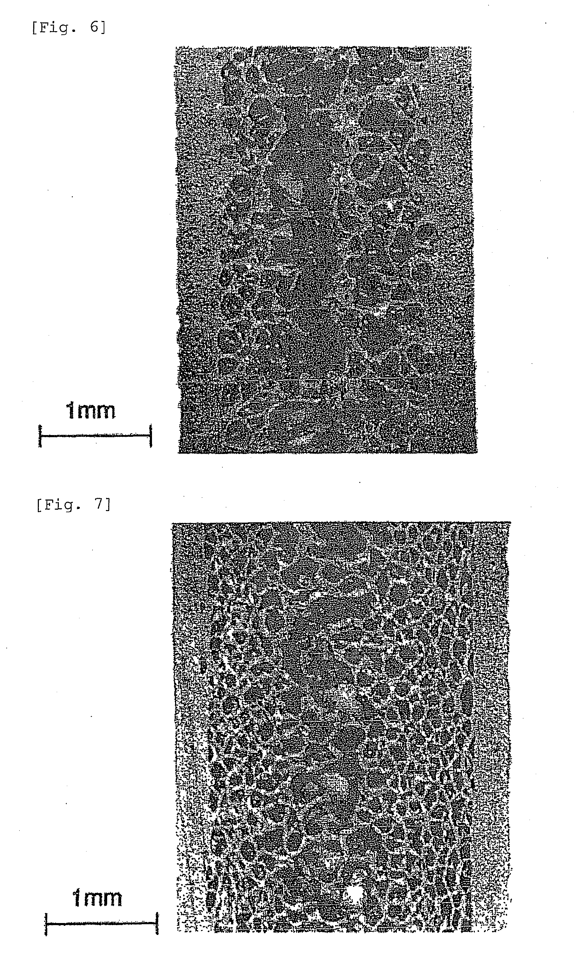

A foaming resin composition was produced in the same manner as in Example 1, except that the component (A) was used in an amount of 69 parts by weight and the component (B-1) was not used. The composition was foamed and the molded foam was evaluated in the same manner as in Example 1. The results are set forth in Table 2. A cross sectional picture of the molded foam is shown in Fig. 6.

[Comparative Example 2]

A foaming resin composition was produced in the same manner as in Example 1, except that the component (A) was used in an amount of 66 parts by weight and that the component (B-1) was replaced by a component (B-2) (containing 22 wt% of a component with an intrinsic viscosity $[\eta]_1$ at 135°C in tetralin of 8.1 dl/g, and 78 wt% of a component with an intrinsic viscosity $[\eta]_2$ of 1. 0 dl/g, $[\eta]_{total}$ = 2.6 dl/g). The composition was foamed and the molded foam was evaluated in the same manner as in Example 1. The results are set forth in Table 2.

[Comparative Example 3]

A foaming resin composition was produced in the same manner as in Comparative Example 2, except that the component (A) and the component (B-2) were used in amounts of 64 parts by weight and 5 parts by weight, respectively. The composition was foamed and the molded foam was evaluated in the same manner as in Example 1. The results are set forth in Table 2.

[Comparative Example 4]

A foaming resin composition was produced in the same manner as in Comparative Example 2, except that the component (A) and the component (B-2) were used in amounts of 60 parts by weight and 9 parts by weight, respectively. The composition was foamed and the molded foam was evaluated in the same manner as in Example 1. The results are set forth in Table 2. A cross sectional picture of the molded foam is shown in Fig. 7.

[Comparative Example 5]

A foaming resin composition was produced in the same manner as in Example 7, except that the component (A) was used in an amount of 80 parts by weight and the component (B-1) was not used. The composition was foamed and the molded foam was evaluated in the same manner as in Example 1. The results are set forth in Table 2.

[Comparative Example 6]

A foaming resin composition was produced in the same manner as in Example 1, except that the component (A) and the component (B-1) were used in amounts of 68 parts by weight and 1 part by weight, respectively. The composition was foamed and the molded foam was evaluated in the same manner as in Example 1. The results are set forth in Table 2.

[Comparative Example 7]

A foaming resin composition was produced in the same manner as in Example 1, except that the component (A) and the component (B-1) were used in amounts of 49 parts by weight and 20 parts by weight, respectively. The composition was foamed and the molded foam was evaluated in the same manner as in Example 1, except that the foaming agent masterbatch was used in an amount of 9 parts by weight based on 100 parts by weight of the resin composition. The results are set forth in Table 2.

[Comparative Example 8]

A foaming resin composition was produced in the same manner as in Comparative Example 1, except that the component (A) and the component (C-1) were used in amounts of 70 parts by weight and 16 parts by weight, respectively. The composition was foamed and the molded foam was evaluated in the same manner as in Comparative Example 1. The results are set forth in Table 2.

[Comparative Example 9]

An injection foaming impact polypropylene (TD026S manufactured by Prime Polymer Co., Ltd.) having MFR = 71 was foamed and the molded foam obtained was evaluated in the same manner as in Comparative Example 8. The results are set forth in Table 2.

[Comparative Example 10]

An injection foaming impact polypropylene (FX200S manufactured by Prime Polymer Co., Ltd.) having MFR = 65 was foamed and the molded foam obtained was evaluated in the same manner as in Comparative Example 8. The results are set forth in Table 2.

[Comparative Example 11]

An injection foaming impact polypropylene (FX800 manufactured by Prime Polymer Co., Ltd.) having MFR = 44 was foamed and the molded foam obtained was evaluated in the same manner as in Comparative Example 8. The results are set forth in Table 2.

[Comparative Example 12]

An impact polypropylene (J830HV manufactured by Prime Polymer Co., Ltd.) having MFR = 30 was foamed and the molded foam obtained was evaluated in the same manner as in Comparative Example 8. The results are set forth in Table 2.

[Comparative Example 13]

An impact polypropylene (J708UG manufactured by Prime Polymer Co., Ltd.) having MFR = 40 was foamed and the molded foam obtained was evaluated in the same manner as in Comparative Example 8. The results are set forth in Table 2.

[Comparative Example 14]

An impact polypropylene (J709QG manufactured by Prime Polymer Co., Ltd.) having MFR = 57 was foamed and the molded foam obtained was evaluated in the same manner as in Comparative Example 8. The results are set forth in Table 2.

[Comparative Example 15]

An impact polypropylene (J6083HP manufactured by Prime Polymer Co., Ltd.) having MFR = 60 was foamed and the molded foam obtained was evaluated in the same manner as in Comparative Example 8. The results are set forth in Table 2.

Examples and Comparative Examples described above are largely grouped as follows.

Examples 1-9, and Comparative Examples 6 and 7: High-molecular weight component-containing homopolypropylene B-1 was added.

Comparative Examples 2-4: High-molecular weight component-containing homopolypropylene B-2 was added.

Comparative Examples 1, 5 and 8: No high-molecular weight component-containing homopolypropylenes were added.

Comparative Examples 9-11: Commercially available foaming polypropylene.

Comparative Examples 12-15: Commercially available general polypropylene.

[Example 10]

A foaming resin composition was prepared by mixing and pelletizing:

69 parts by weight of a propylene/ethylene block copolymer (component AB) which had $MFR_{230}$ of 110 g/10 min and in which $MFR_{230}$ of a normal temperature paraxylene insoluble component ($X_{insol}$) was 240 g/10 min, the normal temperature paraxylene insoluble component ($X_{insol}$) contained 1.9 wt% of a component having an intrinsic viscosity [$\eta$] of 16 dl/g, the content of a normal temperature paraxylene soluble component ($X_{sol}$) was 11 wt%, and [$\eta$] of the normal temperature paraxylene soluble component ($X_{sol}$) was 4.5 dl/g;

17 parts by weight of a single-site catalyzed, low-molecular weight ethylene/1-butene copolymer (EBR) (A-35070S manufactured by Mitsui Chemicals, Inc.) (component C-1) having a density of 0.87 g/cm$^3$ and $MFR_{190}$ of 35 g/10 min; and

14 parts by weight of fine powdery talc (component D) (average particle diameter: 4.1 $\mu$m).

The component (AB) had been prepared by the following polymerizations.

(1) Prepolymerization

A 5 liter volume three-necked flask equipped with a stirrer was thoroughly dried and purged with nitrogen gas. Thereafter, 4 L of dehydrated heptane, 140 g of diethylaluminum chloride and 20 g of a commercially available Solvay type titanium trichloride catalyst (manufactured'by Tosoh Finechem Corporation) were added. The inside temperature was held at 20°C, and propylene was continuously supplied with stirring. After 80 minutes, the stirring was terminated. As a result, a prepolymerized catalyst component was obtained in which 0.8 g of propylene was polymerized per 1 g of the solid catalyst.

(2) Propylene/ethylene block copolymerization (i) Propylene polymerization

A 10 liter volume stainless steel autoclave equipped with a stirrer was thoroughly dried and purged with nitrogen gas. Thereafter, 6 L of dehydrated heptane was added. Further, a toluene solution of 1.3 mmol of ε-caprolactone was added.

The system was purged of nitrogen with propylene, and propylene was introduced with stirring. After the system became stable at an inside temperature of 40°C and a total pressure of 0.78 MPa-G, 50 ml of a heptane slurry containing 0.75 g of the prepolymerized catalyst component in terms of solid catalyst was added, thereby initiating the polymerization. The integrated value of propylene flow when propylene had been continuously supplied for 10 minutes showed that the amount of the polymer produced was 50 g. A small portion was sampled and analyzed, resulting in an intrinsic viscosity of 16.2 dl/g. Thereafter, the inside temperature was decreased to not more than 30°C, the stirring was reduced, and the system was depressurized.

Subsequently, the inside temperature was increased to 60°C and hydrogen was added to 0.25 MPa-G. Propylene was introduced with stirring. Polymerization was performed at 60°C for 3.5 hours while continuously supplying propylene at a total pressure of 0.78 MPa-G. Thereafter, the inside temperature was decreased to not more than 30°C, the stirring was reduced, and the system was depressurized.

A portion of the polymer was sampled and analyzed, resulting in an intrinsic viscosity of 0.98 dl/g and MFR of 240 g/10 min.

(ii) Propylene/ethylene copolymerization

Next, the inside temperature was brought to 57°C and hydrogen was added to 0.01 MPa-G. Ethylene/propylene mixture gas (ethylene/propylene molar ratio: 0.7/1.0) was introduced with stirring. The initiation of copolymerization was decided when the total pressure reached 0.60 MPa-G, and the propylene/ethylene mixture gas was continuously supplied. After 1 hour from the polymerization initiation, 50 ml of methanol was added, and the system was cooled and depressurized. The entire content was transferred to a filtration tank equipped with a filter, and 100 ml of 1-butanol was added. The mixture was stirred at 60°C for 1 hour, and solid-liquid separation was performed. The solid was washed twice with 6 L of 60°C heptane, and was vacuum dried to give 3.0 kg of a propylene polymer.

[Table 1]

Table 1

| | | | EXAMPLES | | | | | | | | |
|---|---|---|---|---|---|---|---|---|---|---|---|
| | | | 1 | 2 | 3 | 4 | 5 | 6 | 7 | 8 | 9 |
| Resin composition (parts) | Impact polypropylene | A | 66 | 64 | 62 | 60 | 61 | 74 | 75 | 59 | 58 |
| | High-molecular weight component-containing homopolypropylenes | B-1 | 3 | 5 | 7 | 9 | 5 | 5 | 5 | 4 | 4 |
| | | B-2 | | | | | | | | | |
| | Rubber components Rubber components | C-1 (EBR) | 17 | 17 | 17 | 17 | | | | 17 | 17 |
| | | C-2 (EOR) | | | | | 20 | 20 | 20 | | |
| | Inorganic filler | D | 14 | 14 | 14 | 14 | 14 | 1 | | 14 | 4 |
| | High flowability homopolypropylene | E | | | | | | | | 6 | 17 |
| | Commercially available impact polypropylene | | | | | | | | | | |
| | Total | | 100 | 100 | 100 | 100 | 100 | 100 | 100 | 100 | 100 |
| Properties | MFR (230°C) | | 65 | 61 | 55 | 48 | 58 | 62 | 64 | 71 | 90 |
| | MT (180°C) | | 2 | 4.3 | 6.2 | 8.7 | 4.3 | 1.9 | 1.9 | 2.2 | 1.5 |
| | Foaming agent (parts) | | 6 | 6 | 6 | 9 | 6 | 6 | 6 | 6 | 6 |
| Evaluation | Expansion ratio achievement ($t/t_0$ = 3.0/1.2) | | A | A | A | A | A | A | A | A | A |
| | Cell shape | | A | A | A | A | A | A | A | A | A |
| | Planarity | | A | A | B | A | A | A | A | A | A |
| | Molding stability | | A | A | B | A | A | A | A | A | A |

[Table 2]

Table 2

| | | | COMPARATIVE EXAMPLES | | | | | | | | | | | | | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 |
| Resin composition (parts) | Impact polypropylene | A | 69 | 66 | 64 | 60 | 80 | 68 | 49 | 70 | | | | | | | |
| | High-molecular weight component-containing homopolypropylenes | B-1 | | | | | | 1 | 20 | | | | | | | | |
| | | B-2 | | 3 | 5 | 9 | | | | | | | | | | | |
| | Rubber components | C-1 (EBR) | 17 | 17 | 17 | 17 | | 17 | 17 | 16 | | | | | | | |
| | | C-2 (EOR) | | | | | 20 | | | | | | | | | | |
| | Inorganic filler | D | 14 | 14 | 14 | 14 | | 14 | 14 | 14 | | | | | | | |
| | High flowability homopolypropylene | E | | | | | | | | | | | | | | | |
| | Commercially available impact polypropylene | | | | | | | | | | 100 | 100 | 100 | 100 | 100 | 100 | 100 |
| | Total | | 100 | 100 | 100 | 100 | 100 | 100 | 100 | 100 | 100 | 100 | 100 | 100 | 100 | 100 | 100 |
| Properties | MFR (230°C) | | 75 | 63 | 55 | 49 | 75 | 70 | 35 | 70 | 71 | 65 | 44 | 30 | 40 | 57 | 60 |
| | MT (180°C) | | 0.56 | 0.8 | 1.3 | 1.9 | 0.3 | 1 | 15 | 0.44 | 0.58 | 0.44 | 1.56 | 0.56 | 0.28 | 0.23 | 0.23 |
| | Foaming agent (parts) | | 6 | 6 | 6 | 6 | 6 | 6 | 9 | 6 | 6 | 6 | 6 | 6 | 6 | 6 | 6 |
| Evaluation | Expansion ratio achievement ($t/t_0$ = 3.0/1.2) | | C | C | C | C | C | C | C | C | C | C | C | C | C | C | C |
| | Cell shape | | C | C | C | B | C | C | A | C | C | C | C | C | C | C | C |
| | Planarity | | B | B | C | C | B | B | C | A | A | A | B | C | C | C | C |
| | Molding stability | | C | C | C | C | C | B | C | B | B | B | B | C | C | C | C |

[Table 3]

Table 3

| | | | EXAMPLE 10 |
|---|---|---|---|
| Resin composition (parts) | High-molecular weight component-containing impact polypropylene | AB | 69 |
| | Rubber | C-1 (EBR) | 17 |
| | components | C-2 (EOR) | |
| | Inorganic filler | D | 14 |
| | High flowability homopolypropylene | E | |
| | Commercially available impact polypropylene | | |
| | Total | | 100 |
| Properties | MER (230°C) | | 60 |
| | MT (180°C) | | 4.5 |
| Foaming agent (parts) | | | 6 |
| Evaluation | Expansion ratio achievement ($t/t_0$ = 3.0/1.2) | | A |
| | Cell shape | | A |
| | Planarity | | A |
| | Molding stability | | A |

Industrial Applicability

The foaming polypropylene resin compositions of the invention are suited for foam molding, in particular injection foam molding. The injection-molded foams of the invention are suitably used in various applications including automobile interior and exterior parts, substitutes for cardboards and the like, electric appliance and building materials. In particular, they are suited in applications related to automobile interior parts and automobile exterior parts.

Reference Signs List

1: fixed mold
2: movable mold
3: cavity
4: valve gate
5: nozzle of injection molding apparatus
6: molten resin

**Claims**

1. A foaming polypropylene resin composition which comprises:

50 to 90 parts by weight of a high-molecular weight component-containing impact polypropylene (AB);
10 to 30 parts by weight of a rubber component (C); and
0 to 20 parts by weight of an inorganic filler (D) (wherein the total of (AB), (C) and (D) is 100 parts by weight); and wherein:

the high-molecular weight component-containing impact polypropylene (AB) contains 4.5 to 31.0 wt% of a propylene/ethylene copolymer that is identified as a normal temperature paraxylene soluble component, and

the high-molecular weight component-containing impact polypropylene (AB) contains 0.2 to 3.7 wt% of a propylene polymer component having an intrinsic viscosity [η] at 135°C in tetralin of 13.5 to 20.0 dl/g.

2. The foaming polypropylene resin composition according to claim 1, which further comprises, in addition to (AB), (C) and (D):

5 to 20 parts by weight of a high flowability homopolypropylene (E) (wherein the total of (AB), (C), (D) and (E) is 100 parts by weight); and wherein:

the high flowability homopolypropylene (E) has MFR of 200 to 1000 g/10 min as measured at 230°C under 2.16 kg load in accordance with ASTM D-1238.

3. The foaming polypropylene resin composition, wherein the high-molecular weight component-containing impact polypropylene (AB) comprises:

45 to 87 parts by weight of an impact polypropylene (A) and
2 to 15 parts by weight of a high-molecular weight component-containing homopolypropylene (B) (wherein the total of (A), (B), (C) and (D) is 100 parts by weight); and wherein:

the impact polypropylene (A) contains 5 to 30 wt% of a propylene/ethylene copolymer that is identified as a normal temperature paraxylene soluble component, and
the high-molecular weight component-containing homopolypropylene (B) contains:

5 to 22 wt% of a propylene homopolymer component (i) having an intrinsic viscosity [η] at 135°C in tetralin of 13.5 to 20.0 dl/g, and
78 to 95 wt% of a propylene homopolymer component (ii) having an intrinsic viscosity [η] at 135°C in tetralin of 0.5 to 3.0 dl/g.

4. The foaming polypropylene resin composition according to claim 3, which further comprises, in addition to (A), (B), (C) and (D):

5 to 20 parts by weight of a high flowability homopolypropylene (E) (wherein the total of (A), (B), (C), (D) and (E) is 100 parts by weight); and wherein:

the high flowability homopolypropylene (E) has MFR of 200 to 1000 g/10 min as measured at 230°C under 2.16 kg load in accordance with ASTM D-1238.

5. The foaming polypropylene resin composition according to claim 3 or 4, wherein the impact polypropylene (A) has MFR measured at 230°C under 2.16 kg load in accordance with ASTM D-1238 of 50 to 200 g/10 min, and the propylene/ethylene copolymer identified as a normal temperature paraxylene soluble component has an intrinsic viscosity [η] of 3.5 to 10 dl/g.

6. The foaming polypropylene resin composition according to any one of claims 1 to 5, wherein the rubber component (C) is an ethylene/C3-10 α-olefin copolymer having MFR measured at 190°C under 2.16 kg load in accordance with ASTM D-1238 of 1 to 50 g/10 min and a density of 0.86 to 0.92 g/cm$^3$.

7. The foaming polypropylene resin composition according to claim 6, wherein the rubber component (C) is an ethylene/α-olefin elastomer produced with a single site catalyst.

8. The foaming polypropylene resin composition according to any one of claims 1 to 7, which has $MFR_{230}$ measured at 230°C under 2.16 kg load in accordance with ASTM D-1238 of 30 to 200 g/10 min.

9. The injection foaming polypropylene resin composition according to any one of claims 1 to 7, wherein $MFR_{230}$ of the foaming polypropylene resin composition measured at 230°C under 2.16 kg load in accordance with ASTM D-1238 and the melt tension $MT_{180}$ thereof have the relations (1) to (3) below:

$$MT_{180} \geq 5500 \times (MFR_{230})^{-2} \quad \cdots \quad (1)$$

$$MT_{180} \leq 30000 \times (MFR_{230})^{-2} \quad \cdots \quad (2)$$

$$40 \leq MFR_{230} \leq 120 \quad \cdots \quad (3).$$

**10.** An injection-molded foam obtainable by injection foam molding the foaming polypropylene resin composition described in any one of claims 1 to 9.

**11.** The injection-molded foam according to claim 10, which is obtained by injection foam molding using a chemical foaming agent and/or a physical foaming agent.

**12.** A process for producing the inj ection-molded foams described in claim 10 or 11, wherein the mold cavity clearance ($T_0$) at the initiation of injection is 1.0 to 2.0 mm, and in a cross section of the cavity after backward movement of a movable mold, the ratio of the length ($T_1$) of the cavity in the extended direction relative to To ($T_1/T_0$) is 1.1 to 5.0.

**13.** The injection-molded foam according to claim 10 or 11, which comprises solid skin layers and an expanded layer interposed therebetween, each solid skin layer on the surface of the molded foam being 0.1 to 0.5 mm and the expanded layer being 2 to 4 mm in thickness, the expanded layer having an expansion ratio of 2 to 6 times, wherein in a cross section of the molded foam in parallel with the direction in which a movable mold has been moved backward, a central region accounting for 10 to 50% of the expanded layer contains cells at least 70% of which have a ratio "cell diameter perpendicular to the solid skin layer/cell diameter along the solid skin layer" of 0.7 to 1.4, and other regions of the expanded layer contain cells at least 60% of which have a ratio "cell diameter perpendicular to the solid skin layer/cell diameter along the solid skin layer" of 0.1 to 0.9.

**14.** The injection-molded foam according to any one of claims 10 to 13, which is an automobile interior or exterior part.

[Fig. 1]

$T_0$

[Fig. 2]

$T_1$

[Fig. 3]

Thickness measurement position
(moldability evaluation)

[Fig. 4]

Gate

400

Thickness
measurement
positions

200

Thickness measurement positions
(Planarity evaluation)

[Fig. 5]

1mm

[Fig. 6]

1mm

[Fig. 7]

1mm

[Fig. 8]

**INTERNATIONAL SEARCH REPORT**

| International application No. |
| --- |
| PCT/JP2009/068506 |

A. CLASSIFICATION OF SUBJECT MATTER
*C08J9/04*(2006.01)i, *B29C45/00*(2006.01)i, *B29K23/00*(2006.01)n, *B29K105/04* (2006.01)n, *B29K105/06*(2006.01)n, *B29L31/30*(2006.01)n

According to International Patent Classification (IPC) or to both national classification and IPC

B. FIELDS SEARCHED

Minimum documentation searched (classification system followed by classification symbols)
C08J9/04, B29C45/00, B29K23/00, B29K105/04, B29K105/06, B29L31/30

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2003-206369 A (Idemitsu Petrochemical Co., Ltd.), 22 July 2003 (22.07.2003), claims 1 to 3; paragraph [0010] (Family: none) | 1-14 |
| Y | JP 11-181178 A (Grand Polymer Co., Ltd.), 06 July 1999 (06.07.1999), claims 1 to 4; paragraph [0012] (Family: none) | 1-14 |
| Y | WO 2005/097842 A1 (Idemitsu Kosan Co., Ltd.), 20 October 2005 (20.10.2005), description, paragraphs [0056], [0070], [0071], [0074], [0075]; claims 1 to 3, 7, 14 & US 2007/0208138 A1    & EP 1731538 A1 & CN 1972973 A | 1-14 |

☒  Further documents are listed in the continuation of Box C.          ☐   See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 07 December, 2009 (07.12.09) | 15 December, 2009 (15.12.09) |

| Name and mailing address of the ISA/<br>   Japanese Patent Office | Authorized officer |
| --- | --- |
| Facsimile No. | Telephone No. |

Form PCT/ISA/210 (second sheet) (April 2007)

**INTERNATIONAL SEARCH REPORT**

International application No.

PCT/JP2009/068506

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 6-100722 A  (Mitsui Toatsu Chemicals, Inc.), 12 April 1994 (12.04.1994), paragraphs [0010], [0011], [0017] to [0020] (Family: none) | 12-14 |

Form PCT/ISA/210 (continuation of second sheet) (April 2007)

EP 2 343 333 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3918267 B
- JP 2008163320 A
- WO 2005097842 A